# EUROPÄISCHE PATENTANMELDUNG

(11) **EP 2 568 279 A2**
(43) Veröffentlichungstag der Anmeldung: **13.03.2013**
(21) Anmeldenummer: 12182728.1
(22) Anmeldetag: 03.09.2012
(51) Int. Cl.: G01N 21/952, A24C 5/34, G01B 11/30

(54) **Optische Inspektion von stabförmigen Artikeln der Tabak verarbeitenden Industrie**

(30) Priorität: 06.09.2011 DE 102011082178
(71) Anmelder: HAUNI Maschinenbau AG, 21033 Hamburg (DE)
(72) Erfinder: Drews, Ingo, 21509 Glinde (DE); Kock, Hans-Henning, 21529 Kröppelshagen (DE)
(74) Vertreter: Grebner, Christian Georg Rudolf

(57) **Zusammenfassung**

Die Erfindung betrifft ein Verfahren zum optischen Untersuchen von stabförmigen oder strangförmigen Artikeln (12, 12A) der Tabak verarbeitenden Industrie in einer Messeinrichtung (10), insbesondere Online-Messeinrichtung oder Offline-Messeinrichtung. Hierbei werden mittels eines Kamerasystems (11) die Helligkeitswerte und/oder Grauwerte und/oder Farbwerte der Oberfläche eines stabförmigen oder strangförmigen Artikels (12, 12A) in Umfangsrichtung des Artikels (12, 12A) abschnittsweise und schrittweise erfasst, wobei mittels des Kamerasystems (11) die Topographie der abschnittsweise erfassten Oberflächen in Umfangsrichtung erfasst wird und wobei in Bezug auf die Mittenlängsachse des stabförmigen Artikels (12, 12A) eine translatorische und/oder rotatorische Relativbewegung zwischen dem Kamerasystem (11) zum Erfassen der Helligkeitswerte und/oder Grauwerte und/oder Farbwerte der Oberfläche und der Topographie der Oberflächen und dem stabförmigen oder strangförmigen Artikel (12, 12A) während des schrittweise Erfassens der Oberfläche des stabförmigen oder strangförmigen Artikels (12, 12A) in Umfangsrichtung ausgeführt wird.

Ferner betrifft die Erfindung eine Anordnung (10) zum optischen Untersuchen eines, vorzugsweise vereinzelten, stabförmigen Artikels (12) der Tabak verarbeitenden Industrie.

## Beschreibung

Die Erfindung betrifft ein Verfahren zum optischen Untersuchen von stabförmigen Artikeln der Tabak verarbeitenden Industrie in einer Messeinrichtung, insbesondere Online-Messeinrichtung oder Offline-Messeinrichtung. Ferner betrifft die Erfindung eine Anordnung zum optischen Untersuchen eines, vorzugsweise vereinzelten, stabförmigen Artikels der Tabak verarbeitenden Industrie.

Unter stabförmigen Artikeln der Tabak verarbeitenden Industrie werden insbesondere stabförmige Produkte wie Zigaretten, Filterstäbe, Multisegmentfilterstäbe, die vorzugsweise mit einem Umhüllungsstreifen umwickelt sind, verstanden.

Bei der optischen Kontrolle von stabförmigen Artikeln werden üblicherweise Merkmale an den stabförmigen Artikeln detektiert, wie Löcher, Dimensionen, Objektidentifizierung, Stempel, Leimauftrag, Fleckendimensionen, das Vorhandensein von Filterelementen, Beschädigungen und dergleichen.

Hierbei werden zur optischen Kontrolle beispielsweise (CCD-)Zeilenkameras oder Matrixkameras eingesetzt, die wegen der Anforderung an die Abbildungsqualität und Auflösungsqualität mit aufwendigen, großen Objektiven ausgestattet sind.

Während der Herstellung der stabförmigen Produkte wird die Qualität der beispielsweise an einer Filteransetzmaschine hergestellten Filterzigaretten überwacht, wobei die hergestellten Filterzigaretten stichprobenartig überprüft werden. Hierbei werden Filterzigaretten entnommen und die stichprobenartig entnommenen Zigaretten in Bezug auf ihre geometrischen Abmessungen und auf ihre physikalischen Eigenschaften wie zum Beispiel Zugluft bzw. Ventilationsgrad getestet. Dies erfolgt offline, d.h. dass eine Produktionsmaschine kontinuierlich Filterzigaretten herstellt, während getrennt (offline) vom Produktionsprozess in einer separaten Messeinrichtung oder Messanordnung die stichprobenartig entnommenen Zigaretten geprüft werden.

Darüber hinaus ist beispielsweise in EP-B-0 937 978 eine elektrooptische Einheit zum Abtasten der seitlichen Oberfläche von Gegenständen im Wesentlichen zylindrischer Form offenbart. Außerdem ist in EP-B-1 151 283 ein Inspektionssystem für die Oberfläche von zylindrischen Objekten beschrieben. Überdies offenbart EP-B-1 604 191 ein Verfahren und eine Vorrichtung zur Feststellung einer oder mehrerer physikalischer Eigenschaften eines gerollten Rauchartikels oder Filterstabs.

Die Aufgabe der Erfindung besteht darin, die Kontrolle von stabförmigen Artikeln der Tabak verarbeitenden Industrie zu verbessern, wobei auf einfache Weise mögliche Fehler am stabförmigen Artikel erkannt werden sollen.

Gelöst wird diese Aufgabe durch ein Verfahren zum optischen Untersuchen von stabförmigen oder strangförmigen Artikeln der Tabak verarbeitenden Industrie in einer Messeinrichtung, insbesondere Online-Messeinrichtung oder Offline-Messeinrichtung, wobei mittels eines Kamerasystems die Helligkeitswerte und/oder Grauwerte und/oder Farbwerte der Oberfläche eines stabförmigen oder strangförmigen Artikels in Umfangsrichtung des Artikels abschnittsweise und schrittweise erfasst werden, wobei mittels des Kamerasystems die Topographie der abschnittsweise erfassten Oberflächen in Umfangsrichtung erfasst wird und wobei in Bezug auf die Mittenlängsachse des stabförmigen Artikels eine translatorische und/oder rotatorische Relativbewegung zwischen dem Kamerasystem zum Erfassen der Helligkeitswerte und/oder Grauwerte und/oder Farbwerte der Oberfläche und der Topographie der Oberflächen und dem stabförmigen oder strangförmigen Artikel während des schrittweise Erfassens der Oberfläche des stabförmigen oder strangförmigen Artikels in Umfangsrichtung ausgeführt wird.

Die Erfindung beruht auf dem Gedanken, dass mittels eines Kamerasystems, vorzugsweise gleichzeitig, Bilddaten von der Oberfläche eines strangförmigen oder stabförmigen Artikels als Helligkeitswerte und/oder Farbwerte und/oder Grauwerte und Daten über die Topographie der Oberfläche des Artikels der stabförmigen Artikel als Topographiedaten aufgenommen werden, so dass die Helligkeitswerte sowie Farb- und/oder Grauwerte über die Oberfläche und die Topographiedaten über die Oberfläche des Artikels in einer Auswerteeinrichtung anschließend ortsgenau entsprechend zugeordnet werden. Hierdurch wird eine dreidimensionale Erfassung eines stabförmigen Artikels, wie z. B. einer Zigarette oder eines Filterstabs, erreicht.

Dies wird beispielsweise in einer Offline-Messeinrichtung durchgeführt, in der vereinzelt, aus dem Produktionsprozess stichprobenartig entnommene stabförmige Artikel auf optische Weise untersucht werden, wobei die Oberfläche in Umfangsrichtung eines stabförmigen Artikels als Helligkeitswerte und/oder Farbwerte und/oder Grauwerte erfasst werden. Zusätzlich werden während des schrittweisen Erfassungsvorgangs über die gesamte Oberfläche des stabförmigen Artikels auch Erhöhungen oder Vertiefen in der Oberfläche des Artikels erfasst.

Vorzugsweise ist die Messeinrichtung zur Durchführung des Verfahrens als Online- Messeinrichtung oder Offline-Messeinrichtung ausgebildet, wobei mittels des Kamerasystems die Profile der abschnittsweise erfassten Oberflächen in Umfangsrichtung als Topographie der Oberfläche bzw. Oberflächentopographie erfasst werden.

Insgesamt wird dadurch die Untersuchung von, insbesondere vereinzelten, stabförmigen Artikeln erleichtert, wobei auf optische Weise hergestellte stabförmige Artikel, wie z.B. Filterzigaretten, Filterstäbe, Multisegmentfilter oder andere speziellen Filter wie Rezessfilterstäbe, bewertet und klassifiziert werden. Hierdurch wird die Qualitätskontrolle von Filterzigaretten verbessert respektive erhöht, da die optische Qualität der Zigarette bzw. eines Filters reproduzierbar bewertet und qualifiziert wird. Außerdem ist es aufgrund der optischen Untersuchung der stabförmigen Artikel offline möglich, bestehende Messeinrichtungen zur optischen Erfassung von stabförmigen Artikeln im Produktionsbetrieb (online) an Maschinen der Tabak verarbeitenden Industrie zu überprüfen. Beispielsweise ist unter der Bezeichnung "OCIS" (Optical Cigarette Inspection System) eine derartige Online-Messeinrichtung für Zigaretten an einer Filteransetzmaschine bekannt.

Darüber hinaus ist es im Rahmen der Erfindung möglich, aufgrund der separat vom Produktionsprozess erfassten und quantifizierten stabförmigen Artikel die im Produktionsprozess an den Herstellungsmaschinen eingesetzten Messinstrumente oder Messeinrichtungen zu parametrisieren. Dadurch ist es beispielsweise möglich, Online-Messeinrichtungen an einer Herstellungsmaschine, mittels der die hergestellten Zigaretten oder Filterstäbe im Produktionsbetrieb überwacht werden, durch die an einer Offline-Messeinrichtung erfassten und quantifizierten stabförmigen Artikel zu kalibrieren bzw. nachzukalibrieren oder als adaptive Regelgröße für die maschinenintegrierte (Online-)Mess- und Regeleinrichtung zu nutzen. Ebenso ist es denkbar, durch eine automatische Ausschleusung von im Herstellungsprozess fehlerhaft erkannten stabförmigen Artikeln aus dem Produktionsprozess auszuschleusen und einem Offline-Messinstrument oder einer Offline-Messeinrichtung zuzuführen, wodurch der Prozess der Nachkalibrierung automatisiert werden kann. Außerdem ist es dadurch möglich, auch Fehlmessungen von maschinenintegrierten Online-Messinstrumenten z.B. durch Verschmutzung oder dergleichen besser und sicher zu erkennen.

Aufgrund der Erfassung von Bilddaten (Helligkeitswerte und/oder Grauwerte und/oder Farbwerte) und dreidimensionalen Topographiedaten der Artikeloberfläche ist es möglich, die Oberfläche eines hergestellten stabförmigen Produkts gezielt zu bewerten. Dabei ist es neben der Erfassung der geometrischen Abmessungen (Länge, Breite oder Durchmesser) auch möglich, ein komplettes Durchmesserprofil eines stabförmigen Artikels, z.B. Zigarette, zu erstellen.

Darüber hinaus ist es ebenso möglich, ein komplettes dreidimensionales Bild des untersuchten stabförmigen Artikels (z.B. einer Filterzigarette) zu erstellen. Insofern kann beispielsweise ein Versatz von Belagpapier an einer Filterzigarette erkannt werden. Ferner werden beispielsweise offene Wickel an den Filterzigaretten erkannt. Au-βerdem ist es bei der Auswertung der erfassten Daten über die Oberfläche des stabförmigen Artikels in Umfangsrichtung möglich, sowohl Schnittkanten der Umhüllungsstreifen als auch eine Kontrolle der Nähte, von Aufdrucken sowie von Perforationslöchern oder dergleichen zu erfassen. Ebenso können auf einfache Weise auch die Beschaffenheit der Oberfläche sowie Unregelmäßigkeiten in der Oberfläche wie Flecken oder Risse erkannt werden. Außerdem gestattet es die Erfindung, auf optische Weise so genannte LIP-Zonen an Filterzigaretten zu kontrollieren.

Dazu ist in einer Weiterbildung des Verfahrens vorgesehen, dass das Kamerasystem zum Erfassen der Oberfläche und des Profils der Oberfläche des stabförmigen Artikels bzw. das Kamerasystem zum Erfassen der Helligkeitswerte und/oder Grauwerte und/oder Farbwerte der Oberfläche und der Topographie der Oberfläche des stabförmigen oder strangförmigen Artikels mindestens eine 3D-Kamera und/oder mindestens eine Scaneinrichtung, insbesondere eine Laserscaneinrichtung, und/oder mindestens eine Kamera, die insbesondere als Zeilenkamera ausgebildet ist, aufweist.

Hierbei ist die Scaneinrichtung zum Erfassen der Topographie der Oberfläche vorgesehen, während mittels einer Flächenkamera oder einer Zeilenkamera, z.B. CCD-Zeilenkamera, die Oberfläche abgetastet wird, so dass die abgetastete Teiloberfläche des stabförmigen Artikels mittels Helligkeitswerten und/oder Grauwerten und/oder Farbwerten erfasst wird.

Im Rahmen der Erfindung ist es dabei möglich, dass für die optische Untersuchung eines stabförmigen Artikels mehrere Scaneinrichtungen oder Flächenkameras oder Zeilenkameras eingesetzt werden, wodurch die Zeit für eine optische Untersuchung eines kompletten Artikels erheblich verkürzt wird.

Im Rahmen der Erfindung ist es alternativ oder zusätzlich möglich, dass für die optische Untersuchung wenigstens eine 3D-Kamera eingesetzt wird.

In einer alternativen Ausgestaltung ist vorgesehen, dass das Kamerasystem zum schrittweisen oder abschnittsweisen Erfassen der Topographie der Oberfläche des stabförmigen Artikels mindestens eine Flächenkamera aufweist, wobei vorzugsweise die mindestens eine Flächenkamera eine Fokussiereinrichtung aufweist, oder dass das Kamerasystem zum Erfassen der Topographie der Oberfläche des stabförmigen Artikels mindestens eine Zeilenkamera aufweist, wobei vorzugsweise die mindestens eine Zeilenkamera eine Fokussiereinrichtung aufweist. Mittels der entsprechenden Fokussiereinrichtung ist es möglich, mittels einer Flächenkamera oder Zeilenkamera neben Bilddaten (Helligkeitswerte und/oder Grauwerte und/oder Farbwerte) auch Werte über die dreidimensionale Topographie der Oberfläche des strangförmigen oder stabförmigen Artikels und damit über die Struktur des Artikels zu erfassen.

Darüber hinaus ist das Verfahren dadurch weitergebildet, dass das Kamerasystem wenigstens eine Kamera zum Erfassen einer Stirnfläche eines Kopfendes des stabförmigen Artikels aufweist, wobei insbesondere die Kamera zum Erfassen einer Stirnfläche eines Kopfendes des stabförmigen Artikels als eine Flächenkamera, insbesondere mit einer Fokussiereinrichtung, oder als eine 3D-Kamera ausgebildet ist. Hierdurch ist gewährleistet, dass neben der zylindrischen Oberfläche des stabförmigen Artikels in Umfangsrichtung auch die kreisförmigen Kopfenden eines stabförmigen Artikels erfasst werden, wobei hierzu ebenfalls Helligkeitswerte und/oder Grauwerte und/oder Farbwerte über die Oberfläche der Stirnseiten bzw. der Stirnflächen erfasst werden und gegebenenfalls gleichzeitig topographische Daten über die Stirnseiten an den Kopfenden der stabförmigen Artikel erfasst werden.

Überdies ist es in einer bevorzugten Ausgestaltung des Verfahrens vorteilhaft, dass zur Erfassung der Oberfläche des stabförmigen Artikels in Umfangsrichtung, vorzugsweise in Form von Helligkeitswerten und/oder Grauwerten und/oder Farbwerten der Oberfläche, und der Topographie der Oberfläche der stabförmigen Artikel mittels einer Rotiereinrichtung um seine Mittenlängsachse rotiert wird und die mindestens eine Kamera und/oder die mindestens eine Scaneinrichtung des Kamerasystems parallel zur Mittenlängsachse des stabförmigen Artikels, vorzugsweise im Wechsel mit der Rotationsbewegung des stabförmigen Artikels mittels eines Antriebs, bewegt wird. Hierbei ist es im Rahmen der Erfindung vorgesehen, dass als Antrieb für das Kamerasystem entsprechende Schrittmotoren, Servomotoren oder Linearmotoren eingesetzt werden, um das Kamerasystem entlang des stabförmigen Artikels zu bewegen. Dabei sind entsprechende Steuereinrichtungen für die Antriebe entsprechend vorgesehen, um nach bestimmten Vorgaben Abschnitt für Abschnitt die Oberfläche des stabförmigen Artikels optisch zu erfassen respektive zu vermessen. Dabei ist im Rahmen der Erfindung vorgesehen, dass vorzugsweise eine zusätzliche Beleuchtungseinrichtung, insbesondere eine LED-Beleuchtungseinrichtung, an der (Offline-) Messeinrichtung angeordnet oder vorgesehen ist, um den zu untersuchenden Artikel zu beleuchten.

Dazu ist weiter vorteilhafterweise vorgesehen, dass die mindestens eine Kamera und/oder die mindestens eine Scaneinrichtung des Kamerasystems quer, insbesondere senkrecht zur Mittenlängsachse des stabförmigen Artikels während der schrittweisen und abschnittweisen Erfassung der Oberfläche in Umfangsrichtung und der Topographie der Oberfläche des Artikels bewegt wird, so dass der Abstand zwischen der Mittenlängsachse des stabförmigen Artikels und der mindestens einen Kamera des Kamerasystems verändert wird. Hierdurch ist es beispielsweise möglich, die Profile der Oberfläche des stabförmigen Artikels beispielsweise bei Verwendung einer CCD-Kamera mit einer Fokussiereinrichtung zu erfassen.

Dabei ist weiter in einer Ausgestaltung vorgesehen, dass die mindestens eine Kamera und/oder die mindestens eine Scaneinrichtung des Kamerasystems zur Erfassung der Oberfläche und der Topographie der Oberfläche, d.h. des Profils der Oberfläche, des stabförmigen Artikels um die Mittenlängsachse des stabförmigen Artikels rotierend in Umfangsrichtung des Artikels bewegt wird, und parallel zur Mittenlängsachse des stabförmigen Artikels mittels eines Antriebs bewegt wird, wobei in einem nachfolgenden Schritt die mindestens eine Kamera senkrecht zur Mittenlängsachse des stabförmigen Artikels bewegt wird, so dass der Abstand zwischen der Mittenlängsachse des stabförmigen Artikels und der mindestens einen Kamera des Kamerasystems verändert wird.

Das Kamerasystem zur Erfassung der Helligkeitswerte und/oder Grauwerte und/oder Farbwerte der Oberfläche und des Profils der Oberfläche des stabförmigen Artikels wird um die Mittenlängsachse des stabförmigen Artikels rotierend in Umfangsrichtung des Artikels bewegt wird und parallel zur Mittenlängsachse des stabförmigen Artikels mittels eines Antriebs bewegt wird, wobei insbesondere das Kamerasystem quer, insbesondere senkrecht, zur Mittenlängsachse des stabförmigen Artikels bewegt wird, so dass der Abstand zwischen der Mittenlängsachse des stabförmigen Artikels und des Kamerasystems bzw. der mindestens einen Kamera des Kamerasystems verändert wird. Hierbei wird erreicht, dass das Kamerasystem um einen vorzugsweise ruhenden stabförmigen Artikel herumbewegt wird, um die Oberfläche des stabförmigen Artikels vollständig abzutasten. Hierbei wird das Kamerasystem entlang der Mittenlängsachse des stabförmigen Artikels bewegt, während der untersuchte stabförmige Artikel nicht bewegt wird. Das Kamerasystem ist vorteilhafterweise mit mindestens einer Kamera und/oder einer Scaneinrichtung ausgestattet bzw. ausgebildet.

Zudem ist es in einer Ausführungsform bevorzugt, dass das Kamerasystem derart ausgebildet ist, dass die ringförmige Oberfläche des stabförmigen Artikels in Umfangsrichtung abschnittsweise in einem Erfassungsvorgang, d.h. komplett um 360°, erfasst wird, wobei in einem nachfolgenden Erfassungsvorgang das Kamerasystem oder die Kamera des Kamerasystems und der stabförmige Artikel relativ zueinander linear bewegt werden, um anschließend einen weiteren Abschnitt abzutasten. Dadurch ist es möglich, dass in einem Erfassungsvorgang ein kompletter Abschnitt in Umfangsrichtung der Oberfläche um 360° erfasst wird. Es ist dabei vorgesehen, dass das Kamerasystem vorzugsweise mehrere Kameras aufweist, die in einer vorbestimmten Weise um den zu untersuchenden stabförmigen Artikel herum angeordnet sind oder werden. Durch die Erfassung der topographischen Daten des Artikels werden die zylindrische Form und die Struktur des stabförmigen Artikels analysierbar.

Überdies ist in einer Weiterbildung des Verfahren vorgesehen, dass die von dem Kamerasystem erfassten Helligkeitswerte und/oder Grauwerte und/oder Farbwerte und die die von dem Kamerasystem erfassten Topographiewerte einer Datenspeichereinrichtung zugeführt werden, wobei den erfassten Helligkeitswerten und/oder Grauwerten und/oder Farbwerten und Topographiewerten jeweils eine abschnittsgenaue und/oder ortsgenaue Positionskennung eines Positionsdatenmoduls zugewiesen werden.

Bevorzugterweise werden gemäß einer Weiterbildung des Verfahrens in einem nachfolgenden Schritt die von der mindestens einen 3D-Kamera und dem mindestens einen 3-D-Scanner erfassten Topographiewerte mit den von der mindestens einen 3D-Kamera oder Flächenkamera oder Zeilenkamera erfassten Helligkeitswerte und/oder Grauwerte und/oder Farbwerte mittels einer Steuereinrichtung abschnittsweise und deckungsgleich zu einem Gesamtbild zusammengeführt, wobei in einem weiter nachfolgenden Schritt mittels einer Auswerteeinrichtung das Gesamtbild hinsichtlich Unregelmä-βigkeiten analysiert wird und wobei die zuvor ermittelten Unregelmäßigkeiten in mindestens zwei Fehlergruppen, insbesondere nach so genannten Flächenfehlern, insbesondere Verschmutzungen, und nach Profilfehlern, insbesondere Falten oder Löcher, klassifiziert werden.

Ferner wird die Aufgabe gelöst durch eine Anordnung zum optischen Untersuchen eines strangförmigen oder stabförmigen Artikels der Tabak verarbeitenden Industrie, wobei ein Kamerasystem zum Erfassen der Oberfläche des Artikels in Umfangsrichtung des Artikels vorgesehen ist, wobei das Kamerasystem derart ausgebildet ist, dass abschnittsweise die Oberfläche in Umfangsrichtung und die Topographie der Oberfläche in Umfangsrichtung erfasst werden, wobei eine Bewegungseinrichtung für das Kamerasystem, bevorzugterweise mit mindestens einer Kamera, und/oder des strangförmigen oder stabförmigen Artikels vorgesehen ist, so dass in Bezug auf die Mittenlängsachse des strangförmigen oder stabförmigen Artikels während des Erfassens der Oberfläche und der Topographie der Oberfläche des Artikels eine translatorische und/oder rotatorische Relativbewegung zwischen dem Kamerasystem und dem Artikel ausführbar ist, um in aufeinander folgenden Erfassungsvorgängen den Artikel vollständig abzurastern.

Insbesondere weist das Kamerasystem der Helligkeitswerte und/oder Grauwerte und/oder Farbwerte der Oberfläche bzw. zum Erfassen der Oberfläche und der Topographie der Oberfläche des strangförmigen oder stabförmigen Artikels mindestens eine 3D-Kamera oder eine Scaneinrichtung, insbesondere eine Laserscaneinrichtung, und/oder mindestens eine Kamera auf, wobei insbesondere die mindestens eine Kamera als Flächenkamera oder als Zeilenkamera ausgebildet ist.

In einer alternativen Ausgestaltung weist das Kamerasystem zum Erfassen der Oberfläche und der Topographie der Oberfläche des Artikels eine Flächenkamera aufweist, wobei die Flächenkamera eine Fokussiereinrichtung auf, oder das Kamerasystem zum Erfassen der Oberfläche und der Topographie der Oberfläche des strangförmigen oder stabförmigen Artikels in Umfangsrichtung weist eine Zeilenkamera auf, wobei die Zeilenkamera eine Fokussiereinrichtung aufweist.

Vorzugsweise ist wenigstens eine 3D-Kamera oder eine Flächenkamera zum Erfassen einer Stirnfläche des stabförmigen Artikels vorgesehen, wobei vorzugsweise die mindestens eine 3D-Kamera oder Flächenkamera eine Fokussiereinrichtung aufweist.

Hierzu ist zur vollständigen Erfassung der Form sowie der Oberfläche des zu untersuchenden stabförmigen Artikels wenigstens eine Kamera zum Erfassen einer Stirnfläche eines Kopfendes des stabförmigen Artikels vorgesehen, wobei insbesondere die Kamera eine Flächenkamera, insbesondere mit einer Fokussiereinrichtung für die Flächenkamera, oder eine Zeilenkamera, insbesondere mit einer Fokussiereinrichtung für die Zeilenkamera, aufweist. Vorzugsweise sind an beiden Kopfenden des stabförmigen Artikels entsprechende Kameras vorgesehen, um gleichzeitig die Oberfläche der Stirnseiten an den Kopfenden der stabförmigen Artikel zu erfassen.

Bevorzugterweise sind bei der Anordnung weiterhin eine Rotiereinrichtung zur Rotation des stabförmigen Artikels um seine Mittenlängsachse und eine Führungseinrichtung für die mindestens eine Kamera und der Scaneinrichtung des Kamerasystems zur Bewegung der mindestens einen Kamera und/oder der mindestens einen Scaneinrichtung des Kamerasystems parallel zur Mittenlängsachse des stabförmigen Artikels vorgesehen. Die Führungseinrichtung für das Kamerasystem ist zur Bewegung des Kamerasystems parallel zur Mittenlängsachse des stabförmigen Artikels vorgesehen, um eine definierte Relativbewegung gegenüber dem stabförmigen Artikel für die komplette Abrasterung auszuführen, wodurch es möglich ist, die gesamte Oberfläche sowie die Form und gegebenenfalls die Struktur des stabförmigen Artikels zu erfassen und zu analysieren.

Des Weiteren ist bei einer Ausgestaltung der Anordnung vorteilhaft, dass eine Führungseinrichtung für das Kamerasystem, das vorzugsweise mindestens eine Kamera aufweist, vorgesehen ist, so dass das Kamerasystem zur Erfassung der zylinderförmigen Oberfläche des stabförmigen Artikels in Umfangsrichtung und des Profils der Oberfläche des stabförmigen Artikels um die Mittenlängsachse des stabförmigen Artikels in Umfangsrichtung des Artikels bewegt wird und parallel zur Mittenlängsachse des stabförmigen Artikels mittels eines Antriebs bewegt wird, wobei weiterhin insbesondere das Kamerasystem oder die mindestens eine Kamera des Kamerasystems quer, insbesondere senkrecht, zur Mittenlängsachse des stabförmigen Artikels bewegt wird, so dass der Abstand zwischen der Mittenlängsachse des stabförmigen Artikels und des Kamerasystems verändert wird.

Insbesondere ist eine Führungseinrichtung für die 3D-Kamera oder die Flächenkamera des Kamerasystems vorgesehen, so dass die 3D-Kamera oder die Flächenkamera des Kamerasystems zur Erfassung der Oberfläche des stabförmigen Artikels in Umfangsrichtung und der Topographie der Oberfläche um die Mittenlängsachse des stabförmigen Artikels in Umfangsrichtung des Artikels bewegbar ist und parallel zur Mittenlängsachse des stabförmigen Artikels mittels eines motorischen Antriebs bewegbar ist, wobei die mindestens eine 3D-Kamera oder Flächenkamera des Kamerasystems senkrecht zur Mittenlängsachse des stabförmigen Artikels bewegbar ist, so dass der Abstand zwischen der Mittenlängsachse des stabförmigen Artikels und der mindestens einen 3D-Kamera oder Flächenkamera des Kamerasystems mittels mindestens einen Antriebs veränderbar ist.

Außerdem zeichnet sich eine bevorzugte Ausgestaltung der Anordnung dadurch aus, dass ein Steuerungssystem für die mindestens eine Kamera und/oder der mindestens einen Scaneinrichtung und/oder für die Bewegung des strangförmigen oder stabförmigen Artikels vorgesehen ist, wobei das Steuerungssystem eine Datenspeichereinrichtung, ein Positionsdatenmodul und eine Auswerteeinrichtung für die erfassten Helligkeitswerte und/oder Grauwerte und/oder Farbwerte und Topographiewerte aufweist, wobei vorzugsweise eine Anzeigeeinheit zur Darstellung der erfassten Bilddaten und/oder der mindestens zwei Fehlergruppen der Oberfläche des stabförmigen oder strangförmigen Artikels vorgesehen ist. Die Auswerteeinrichtung für die von dem Kamerasystem erfassten Bilddaten derart ausgebildet, wobei die Auswerteeinrichtung einen Datenspeicher sowie eine Anzeige zur Darstellung der erfassten Bilddaten (Farbwerte und/oder Helligkeitswerte der Oberfläche) und Profildaten (Topographie der Oberfläche) aufweist, um eine ortsgenaue und deckungsgleiche Auswertung der Bilddaten zu ermöglichen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine erste Ausführungsform einer Messeinrichtung in einer Ansicht und in einer Seitenansicht;
- Fig. 2: schematisch eine zweite Ausführungsform einer Messeinrichtung in einer Ansicht und in einer Seitenansicht;
- Fig. 3: schematisch eine dritte Ausführungsform einer Messeinrichtung in einer Ansicht und in einer Seitenansicht;
- Fig. 4: schematisch eine vierte Ausführungsform einer Messeinrichtung in einer Ansicht und in einer Seitenansicht;
- Fig. 5: schematisch eine fünfte Ausführungsform einer Messeinrichtung in einer Ansicht und in einer Seitenansicht;
- Fig. 6: schematisch eine sechste Ausführungsform einer Messeinrichtung in einer Ansicht und in einer Seitenansicht;
- Fig. 7: schematisch eine siebte Ausführungsform einer Messeinrichtung in einer Ansicht und in einer Seitenansicht;
- Fig. 8: schematisch eine achte Ausführungsform einer Messeinrichtung in einer Ansicht und in einer Seitenansicht;
- Fig. 9: schematisch eine neunte Ausführungsform einer Messeinrichtung in einer Ansicht und in einer Seitenansicht;
- Fig. 10: schematisch verschiedene Ansichten eines erfassten Oberflächenprofils eines stabförmigen Artikels der Tabak verarbeitenden Industrie im Ausschnitt mit einer ersten Fehlerart;
- Fig. 11: schematisch verschiedene Ansichten eines erfassten Oberflächenprofils eines stabförmigen Artikels der Tabak verarbeitenden Industrie im Ausschnitt mit einer zweiten Fehlerart;
- Fig. 12: schematisch im Ausschnitt eine dreidimensionale Darstellung einer Oberfläche eines stabförmigen Artikels mit einer dritten Fehlerart;
- Fig. 13: schematisch die erste Ausführungsform gemäß Fig. 1 einer Messeinrichtung und eines mit der Messeinrichtung verbundenen Steuerungssystems hierfür und
- Fig. 14: schematisch ein Ablaufdiagramm eines Erfassungsvorgangs für eine Messeinrichtung gemäß Fig. 1.

In den Zeichnungen sind jeweils gleiche oder gleichartige Elemente und/oder Teile mit denselben Bezugsziffern versehen, so dass von einer erneuten Vorstellung jeweils abgesehen wird.

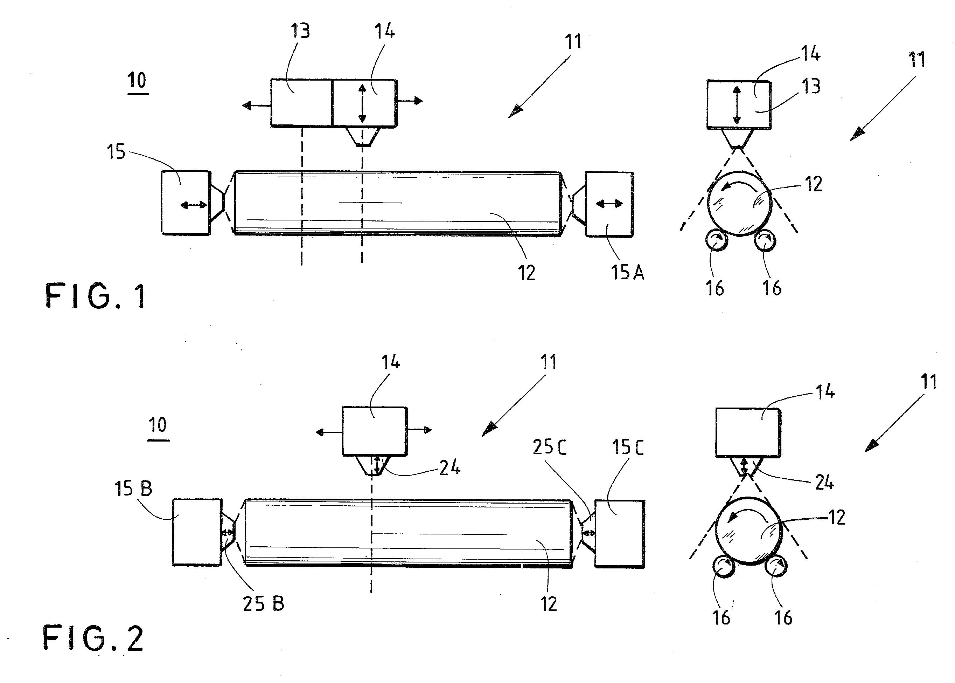

In Fig. 1 bis Fig. 9 sind jeweils schematisch verschiedene Ausführungsbeispiele einer Messanordnung bzw. einer Messeinrichtung 10 zum Untersuchen von stabförmigen Artikeln der Tabak verarbeitenden Industrie, wie z.B. Filterzigaretten oder von Strangabschnitten, dargestellt.

Hierbei ist in den Figuren 1 bis 9 in der jeweils auf der linken Seite dargestellten schematischen Zeichnung eine Ansicht gezeigt, während im rechten Bereich der Figuren eine Seitenansicht schematisch dargestellt ist.

Fig. 1 zeigt eine Messeinrichtung 10 zum Erfassen von Bilddaten, z.B. Helligkeitswerten der Oberfläche einer vereinzelten Zigarette 12. Die Zigarette 12 wurde beispielsweise aus einem Massenstrom an einer Zigarettenherstellmaschine wie z.B. einer Filteransetzmaschine entnommen und der Messeinrichtung 10 zugeführt. Dabei erfolgt die Entnahme der vereinzelten Zigaretten 12 stichprobenartig. Die Messeinrichtung 10 in Fig. 1 ist dabei als so genannte Offline-Messeinrichtung ausgebildet.

Die Messeinrichtung 10 weist ein Kamerasystem 11 mit einer Kamera 14 auf, mittels der die zylindrische Oberfläche der Zigarette 12 als Helligkeitswerte oder als Farbwerte erfasst werden. Darüber hinaus weist die Messeinrichtung 10 sowie das Kamerasystem 11 eine Scaneinrichtung 13 auf, mittels der das dreidimensionale Oberflächenprofil der Oberfläche der Zigarette 12 abgetastet wird. Hierdurch werden topographische Daten über die zylindrische Oberfläche der Zigaretten 12 erfasst. Die Scaneinrichtung 13 und die Kamera 14, die als 3D-Kamera oder als Flächenkamera oder als Zeilenkamera mit CCD-Sensoren ausgebildet ist, sind vorzugsweise als eine Baueinheit angeordnet.

Darüber hinaus sind für das Kamerasystem 11 an den Stirnseiten der Kopfenden der Zigarette 12 auf beiden Seiten Kameras 15, 15A angeordnet, um die Stirnflächen der Kopfenden abzutasten. Hierbei sind die Kameras 15, 15A beispielsweise als 3D-Kamera oder als Flächenkamera oder als Zeilenkamera mit CCD-Sensoren oder dergleichen jeweils ausgebildet.

Um die Oberfläche der Zigarette 12 in Umfangsrichtung vollständig zu erfassen und abzutasten, werden die in einer Baueinheit zusammen verbundene Scaneinrichtung 13 und Kamera 14 des Kamerasystems 11 entlang der Mittenlängsachse der Zigarette 12 verfahren, wobei hierzu ein Schrittmotor oder ein Linearmotor als Antrieb für die Bewegung der Scaneinrichtung 13 und der Kamera 14 vorgesehen ist. Dabei wird die Zigarette 12 unter Verwendung von an der Unterseite der Zigarette 12 angeordneten und rotierend angetriebenen Stützwellen 16 in Rotation versetzt, so dass bei ortsfester Positionierung der Scaneinrichtung 13 und der Kamera 14 ein Abschnitt der Oberfläche der Zigarette 12 über 360° vollständig erfasst wird. Anschließend werden die Scaneinrichtung 13 und die Kamera 14 parallel zur Mittenlängsachse der Zigarette 12 um eine vorbestimmte Schrittweite verfahren, um anschließend an einer anderen Stelle die Oberfläche der Zigarette 12 abzutasten. Die entsprechenden Bilddaten und Topographiedaten werden dabei an eine Auswerteeinrichtung, z.B. einen Rechner, übermittelt, der mit einer entsprechenden Speichereinrichtung für die Daten versehen ist.

Darüber hinaus ist es in einer Ausgestaltung des Kamerasystems 11 vorgesehen, dass die Kamera 14 und die Kameras 15, 15A in ihren Fokusachsen zum untersuchenden Objekt (Zigarette 12) quer, d.h. senkrecht, zur Mittenlängsachse bzw. parallel zur Mittenlängsachse bewegt werden.

In Fig. 2 ist eine weitere Ausführungsform eines Kamerasystems 11 der Messeinrichtung 10 dargestellt, wobei gegenüber der in Fig. 1 gezeigten schematischen Messeinrichtung 10 die Kamera 14 mit einer Fokussiereinrichtung 24 ausgebildet ist. Auch die an den beiden Kopfenden angeordneten Kameras 15B, 15C sind mit einer Fokussiereinrichtung 25B, 25C ausgebildet, so dass der Fokus der Kameras 14, 15B, 15C automatisch verstellt wird, wodurch aufgrund der Fokusänderung der Objektive topographische Daten als dreidimensionale Daten über die erfasste Oberfläche und zylindrische Form der Zigarette 12 erfasst werden. Insofern kann bei der in Fig. 2 dargestellten Ausführungsform von der Verwendung eines 3D-Scanners oder dergleichen abgesehen werden.

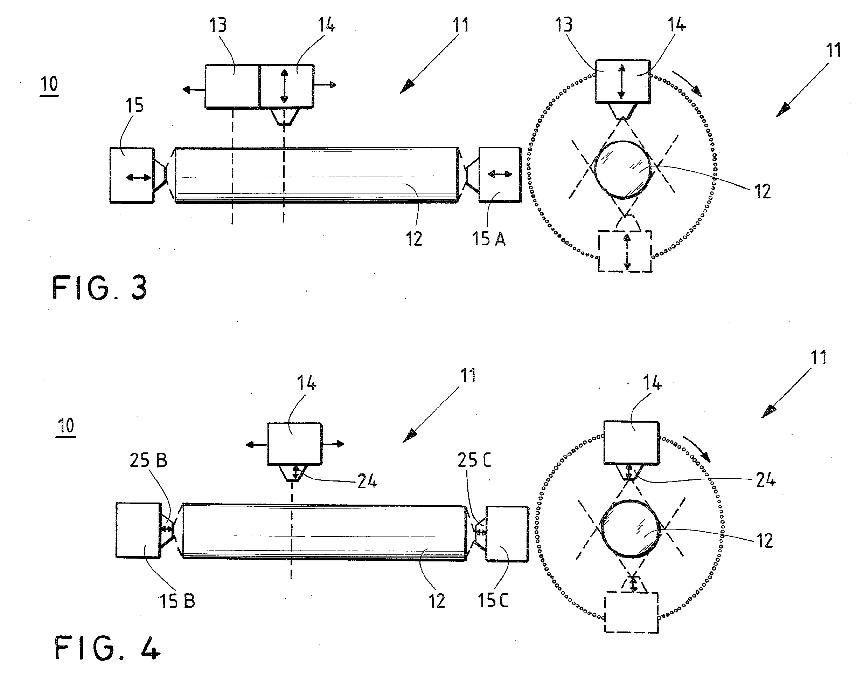

Bei den in Fig. 3 und 4 dargestellten Ausführungsvarianten der Messeinrichtung 10 bzw. des Kamerasystems 11 wird die vereinzelte Filterzigarette oder Zigarette 12 als stabförmiger Artikel der Tabak verarbeitenden Industrie ortsfest gehalten, wobei die Scaneinrichtung 13 und die Kamera 14 sowohl parallel zur Mittenlängsachse der ortsfesten Zigarette 12 schrittweise verfahren und die Scaneinrichtung 13 und die Kamera 14 gemeinsam um die Mittenlängsachse der Zigarette 12 herumbewegt werden, um durch eine Drehung um 360° die Oberfläche der Zigarette 12 in einem vorbestimmten Abschnitt vollständig in Umfangsrichtung abzutasten.

In Fig. 4 ist eine Alternative zu Fig. 3 schematisch gezeigt, wobei die Kamera 14 über eine Fokussiereinrichtung 24 und die Kameras 15B, 15C jeweils über eine Fokussiereinrichtung 25B, 25C verfügen, wodurch aufgrund der Fokusänderung Informationen über die Topographie der abgetasteten Oberfläche sowie der abgetasteten Kontur respektive Form der Zigarette 12 erfasst werden.

Bei den in Fig. 3 und 4 gezeigten Ausführungsbeispielen der Messeinrichtung 10 wird von der Kamera 14 des Kamerasystems 11 sowie von der Laserscaneinrichtung 13 eine lineare und rotatorische Relativbewegung in Bezug auf die unbewegte, d.h. ortsfeste, Zigarette 12 ausgeführt.

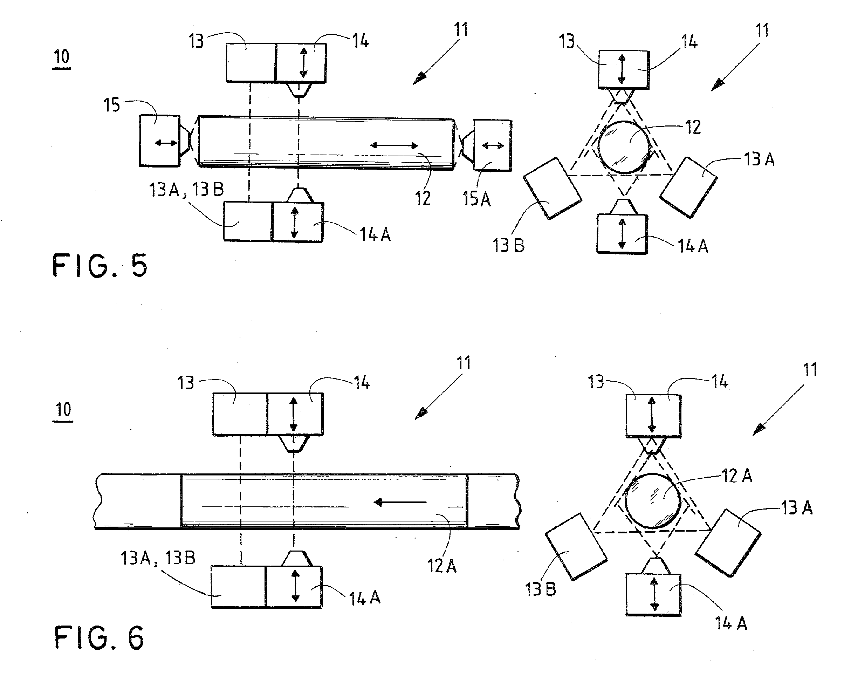

In Fig. 5 ist ein weiteres Ausführungsbeispiel einer Messeinrichtung 10 sowie für das Kamerasystem 11 dargestellt, wobei die Messeinrichtung 10 über ein Kamerasystem 11 verfügt, das mehrere Scaneinrichtungen 13, 13A, 13B und mehrere Kameras 14, 14A aufweist, die am Umfang der Zigarette 12 angeordnet sind. Gemäß dem Ausführungsbeispiel in Fig. 5 sind dabei gegenüber liegend zwei Kameras 14, 14A angeordnet, so dass mittels der beiden Kameras 14, 14A die Oberfläche der Zigarette 12 in Form von Bilddaten jeweils über 360° erfasst wird.

Darüber hinaus sind am Umfang der Zigarette 12 sternförmig drei (Laser-)Scaneinrichtungen 13, 13A, 13B im Winkel von 120° zueinander am Umfang der Zigarette 12 angeordnet, so dass mittels der drei Scaneinrichtungen 13, 13A, 13B in einem Erfassungsvorgang die topographischen Daten über die zylindrische Oberfläche der Zigarette 12 in einem Abschnitt in Umfangsrichtung um 360° erfasst werden.

An den Stirnseiten sind bei dem Ausführungsbeispiel in Fig. 5 darüber hinaus Kameras 15, 15A das Kamerasystem 11 angeordnet, die parallel zur Längsachse der Zigarette 12 bewegt werden. Die Zigarette 12 ist dabei in der Messeinrichtung 10 derart gelagert, dass die Zigarette 12 zusammen mit den Kameras 15, 15A linear in Längsrichtung der Zigarette 12 bewegt wird, so dass die Zigarette 12 gegenüber den ortsfest ausgebildeten Scaneinrichtungen 13, 13A, 13B und den Kameras 14, 14A bewegt wird.

Im Rahmen der Erfindung wird dabei die Zigarette 12 zur Abtastung in vorbestimmten Schritten in Vorschubrichtung getaktet bewegt, so dass die Oberfläche sowie die Form der Zigarette 12 in getakteten Erfassungsvorgängen vollständig erfasst wird. Durch die sternförmige Anordnung der Scaneinrichtungen 13, 13A, 13B und der einander um 180° gegenüber liegenden Kameras 14, 14A wird in einem Abtastvorgang bzw. Erfassungsvorgang eine Aufnahme der Oberfläche um 360° in einem Schritt erfasst.

Das in Fig. 5 dargestellte Ausführungsbeispiel der Messeinrichtung 10 kann dabei als eine Offline-Messeinrichtung ausgeführt sein.

In Fig. 6 ist eine Ausführungsform einer Messeinrichtung 10 sowie eines Kamerasystems dargestellt, die in eine Herstellungsmaschine der Tabak verarbeitenden Industrie integriert ist, so dass die Messeinrichtung 10 gemäß Fig. 6 als Online-Messeinrichtung an einer Herstellmaschine der Tabak verarbeitenden Industrie zum kontinuierlichen Erfassen von strangförmigen Artikeln mit dem Kamerasystem 11 ausgebildet ist.

Hierbei werden vordefinierte Strangabschnitte 12A z.B. eines kontinuierlich bewegten umhüllten Tabakstrangs oder Filterstrangs gegenüber einem ortsfesten Kamerasystem 11 längsaxial gefördert. Das Kamerasystem 11 besteht aus mehreren (hier vorliegend: drei) Scaneinrichtungen 13, 13A, 13B und mehreren, vorliegend zwei, Kameras 14, 14A die ortsfest angeordnet sind, um einen zwischen die sternförmig und gleichmäßig verteilt angeordneten Scaneinrichtungen 13, 13A, 13B und den beiden gegenüber liegenden um 180° versetzt angeordneten Kameras 14, 14A hindurchgeführten strangförmigen Artikel, beispielsweise einen Strangabschnitt 12A des Artikels, vollständig an dessen Umfang abzutasten.

Hierbei wird der Strangabschnitt 12A in längsaxialer Richtung zwischen das Kamerasystem 11 hindurch geführt, wobei der Strangabschnitt 12A hierbei kontinuierlich mit einer bestimmten Vorschubgeschwindigkeit gefördert wird, wobei in vorbestimmten vorgebbaren Abständen bzw. von 0,2 mm eine Abtastung des Strangabschnitts 12A erfolgt.

Erfindungsgemäß ist es sowohl im Offline-Betrieb als auch im Online-Betrieb möglich, durch die Kombination von erfassten zweidimensionalen Daten und dreidimensionalen Daten Fehlstellen an der Oberfläche der Strangabschnitte 12A bzw. der Zigaretten 12 als Artikel der Tabak verarbeitenden Industrie oder Unregelmäßigkeiten der zylindrischen Form der Strangabschnitte 12A bzw. der stabförmigen Zigarette 12 zu erkennen.

Darüber hinaus ist es möglich, so genannte Nähte von Belagpapierstreifen oder Umhüllungspapierstreifen an der Zigarette 12 bzw. am Strangabschnitt 12A zu erkennen, auch in Fällen, in denen auf Grund geringer oder nicht vorhandener Farb- und/oder Grauwerte Kontraste bei einem stabförmigen oder strangförmigen Artikel nicht erkennbar sind. Somit ist beispielsweise eine eindeutige Erkennung von Nahtfehlern auch bei sehr dunklen oder farbigen Umhüllungspapieren oder Sondermaterialien möglich. Außerdem besteht ein Vorteil des verwendeten Kamerasystems 11 darin, dass Fehlstellen wie Falten oder Knicke im Verhältnis zu Löchern oder (farbigen oder dunklen) Einschlüssen im Papier sowie zu sonstigen optischen Fehlern der Papieroberfläche identifiziert und voneinander unterschieden werden können.

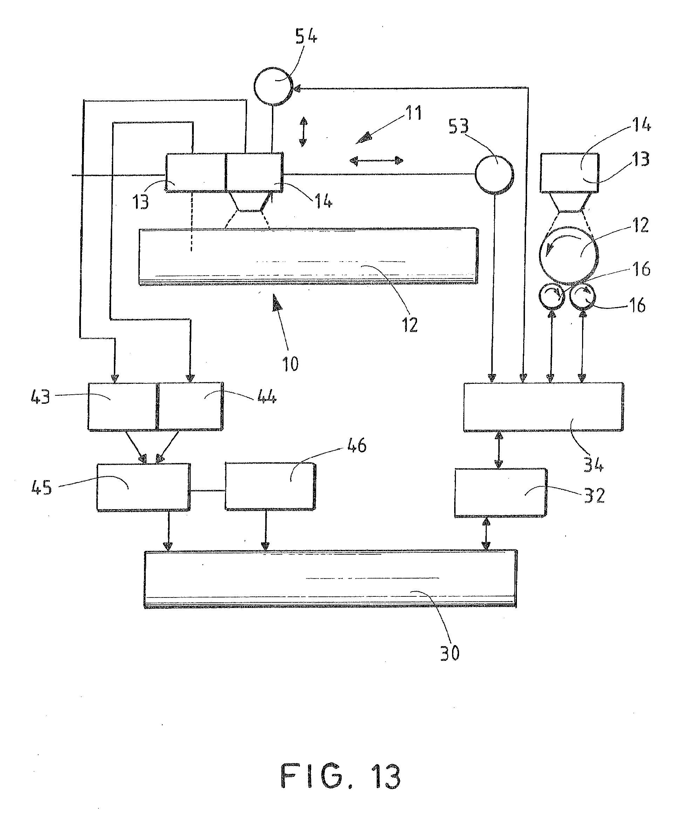

Darüber hinaus gestattet es das Kamerasystem 11, herumfliegende Partikel von anhaftenden Partikeln auf der Oberfläche der Zigarette 12 oder eines Strangabschnitts 12A zu unterscheiden, wie es beispielhaft für eine queraxial geförderte Zigarette in Fig. 13 (siehe unten) gezeigt ist.

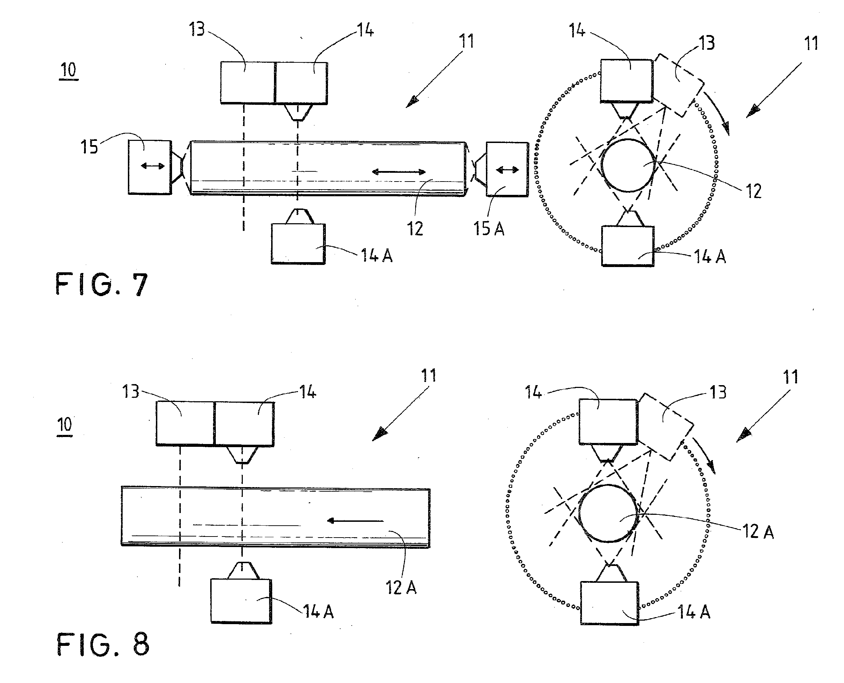

Bei dem in Fig. 7 dargestellten Ausführungsbeispiel einer Messeinrichtung 10 besteht das Kamerasystem 11 zur Erfassung der zylindrischen Oberfläche der Zigarette 12 aus zwei einander gegenüber liegenden Kameras 14, 14A z.B. CCD-Flächenkamera oder CCD-Zeilenkamera, die ortsfest angeordnet sind. Darüber hinaus umfasst das Kamerasystem 11 eine um die Zigarette 12 rotierbar gelagerte und angetriebene Scaneinrichtung 13, die zur Erfassung von topographischen Daten der Oberfläche der Zigarette 12 um die Zigarette 12 um 360° herumgedreht wird. Anschließend wird nach einem Abtastvorgang die Zigarette 12 um eine bestimmte Vorschublänge gegenüber den ortsfesten Kameras 14, 14A bewegt, um anschließend an einer anderen Stelle der Oberfläche der Zigarette 12 diese in einem Bereich abzutasten. Durch die seitlich angeordneten Kameras 15, 15A ist zusätzlich eine Stirnseiteninspektion der Kopfenden möglich.

Während die in Fig. 7 dargestellte Messeinrichtung 10 als Offline-Messeinrichtung betrieben wird, kann die in Fig. 8 dargestellte Messeinrichtung als Online-Messeinrichtung in eine Herstellmaschine der Tabak verarbeitenden Industrie integriert sein. Hierbei wird wie bei der Ausführung in Fig. 7 die Scaneinrichtung 13, die beispielsweise als Laserscaneinrichtung ausgebildet ist, um die längsaxial geförderte Zigarette 12 herum bewegt. Die ortsfesten Kameras 14, 14A, zwischen denen der Strangabschnitt 12A hindurchgefördert wird, sind diametral zueinander angeordnet.

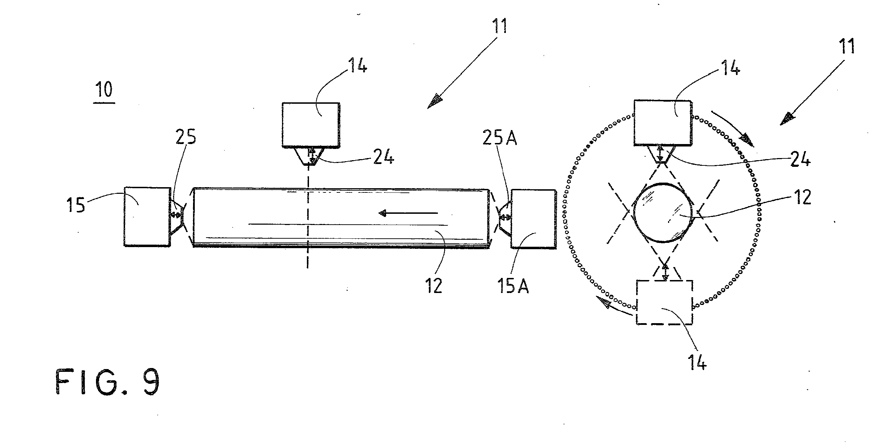

Bei der in Fig. 9 dargestellten Ausführungsvariante der Messeinrichtung 10 wird die mit einer Fokussiereinrichtung 24 für das Objektiv ausgebildete Kamera 14 um die Zigarette 12 herum bewegt, wodurch gleichzeitig Bilddaten und topographische Daten der Oberfläche durch die Änderung des Fokus in einem Erfassungsvorgang möglich ist.

Bei den in den Fig. 5 bis 9 dargestellten Ausführungsbeispielen werden die zu untersuchende und abgetastete Zigarette 12 sowie der Strangabschnitt 12A horizontal in Bezug auf das Kamerasystem 11 mit den Kameras 13, 13A, 13B und mit den Kameras 14, 14A bewegt. Darüber hinaus ist es im Rahmen der Erfindung möglich, dass die Messeinrichtung 10 auch eingesetzt wird, um vertikal bewegte stabförmige Artikel bzw. Zigaretten 12 in ihrer Geometrie sowie Form und Struktur und in ihrem Erscheinungsbild zu erfassen bzw. zu vermessen sowie zu analysieren. Gleiches gilt auch hier für Filterstäbe oder Multisegmentfilterstäbe sowie für Rezessfilterstäbe.

Insbesondere ist bei den Ausführungsbeispielen die Messeinrichtung mit einem Kamerasystem 11 ausgestattet, bei der eine 3D-Kamera vorgesehen ist, wodurch eine dreidimensionale rasterartige Auswertung der erfassten Daten über die Oberfläche, wie z.B. Farbwerte und/oder Grauwerte, und die Form, insbesondere die Topographie, der stabförmigen Artikel auch gleichzeitig aus einem Basisbild möglich ist.

Durch so genannte 3D-Kameras ist es möglich, topographische Daten über die Oberfläche der untersuchten stabförmigen zylinderförmigen Artikel zu gewinnen und entsprechend darzustellen.

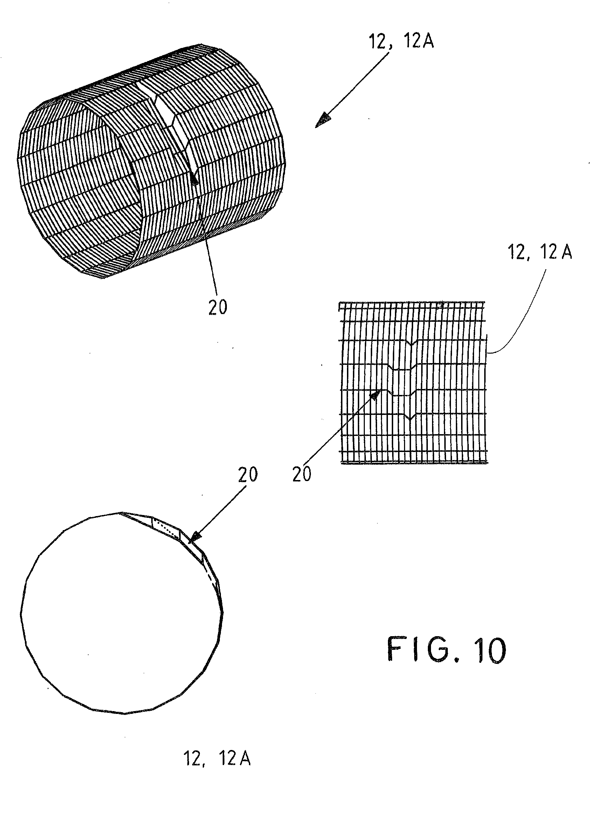

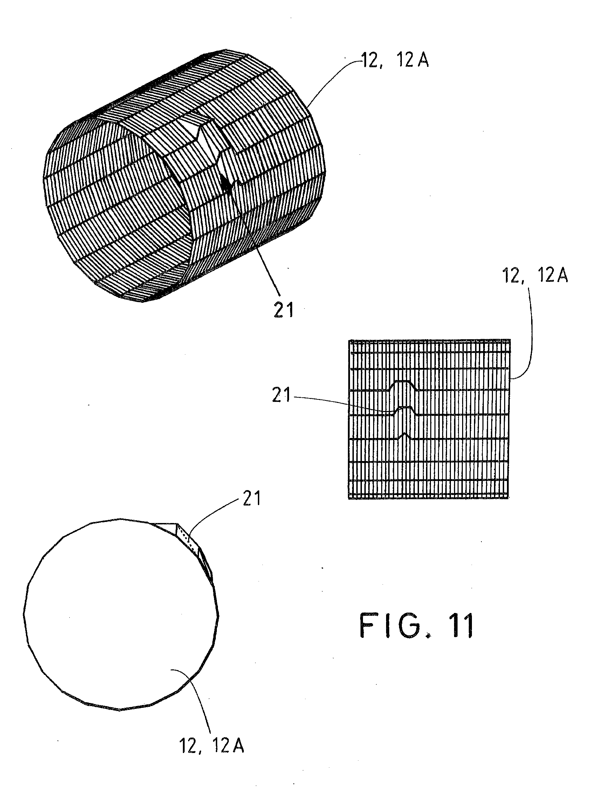

In Fig. 10 und Fig. 11 sind jeweils beispielhaft verschiedene Ansichten eines dreidimensionalen Profils einer Oberfläche einer Zigarette 12 bzw. eines Strangabschnitts 12A im Ausschnitt schematisch dargestellt. Hierbei ist das Oberflächenprofil im oberen Bereich von Fig. 10 sowie von Fig. 11 als 3D-Darstellung, in der mittleren Darstellung als Seitenansicht und in der unteren Darstellung als überlagerte Ansicht aller abgetasteten Profile dargestellt.

Bei den in Fig. 10 dargestellten dreidimensionalen Profilen ist dabei in der Außenseite der Zigarette eine Vertiefung 20 bzw. Delle ausgebildet, die als Fehlstelle erkannt wird. Darüber hinaus ist es aufgrund der Erfassung der topographischen Daten der Oberfläche in Umfangsrichtung der stabförmigen Artikel möglich, auch Erhöhungen oder andere Unregelmäßigkeiten auf der Oberfläche oder an der Oberfläche der stabförmigen Artikel zu erkennen.

Die in Fig. 11 dargestellten zweidimensionalen und dreidimensionalen Darstellungen der Zigarette 12 bzw. eines Strangabschnitts 12A zeigen Profile der Zigarette 12 bzw. des Strangabschnitts 12A mit einer Erhöhung 21, die beispielsweise durch eine Tabakrippe unter dem Umhüllungspapierstreifen entsteht. Insofern ergibt sich aufgrund der unerwünschten Tabakrippe eine Erhöhung in den erfassten Profilen bzw. Bilddaten.

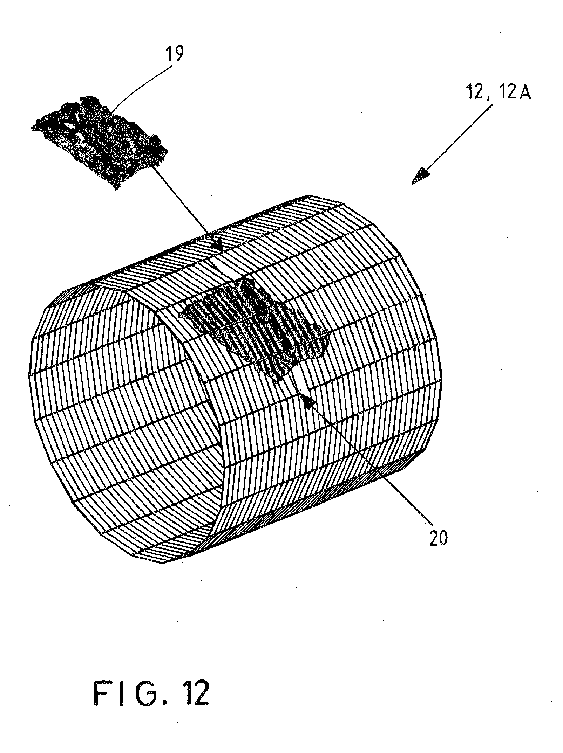

In Fig. 12 ist schematisch die Überlagerung von beispielsweise mit einer CCD-Kamera gewonnenen Bilddaten über die Oberfläche mit der topographischen Erfassung der Oberfläche der Zigarette dargestellt. Hierbei werden die erfassten Bilddaten 19 beispielsweise als Grauwerte mit den topographischen dreidimensionalen Daten (vgl. Fig. 10) kombiniert, so dass es möglich ist, beispielsweise Flecken durch Öle, Farben oder sonstigen Verfärbungen von einer Oberfläche von geometrischen Defekten in der Oberfläche wie z.B. einer Vertiefung 20 zu unterscheiden und ggf. zu klassifizieren.

Fig. 13 zeigt schematisch in einem Diagramm die Steuerung bzw. ein Steuerungssystem zur Steuerung der in Fig. 1 dargestellten Messeinrichtung 10. Hierbei ist eine Gesamtsteuerungseinrichtung 30 vorgesehen, die über ein Positionsmodul 32 mit einer Motorsteuereinheit 34 verbunden ist. Mittels der Motorsteuereinheit 34 werden die Antriebe für die Stützwellen 16 gesteuert. Darüber hinaus ist die der Motorsteuereinheit 34 mit einem Motor 53 zur gleichzeitigen Bewegung der Scaneinrichtung 13 und der Kamera 14 parallel zur Mittenlängsachse der Zigarette 12 verbunden. Durch die Übermittlung entsprechender Steuerungsbefehle von der Motorsteuereinheit 34 an den Motor 53 werden die Scaneinrichtung 13 und die Kamera 14 gleichzeitig miteinander hin und her bewegt. Ferner ist die Motorsteuereinheit 34 mit einem Antrieb 54 für die Kamera 14 verbunden, so dass die Kamera 14 senkrecht zur Mittenlängsachse hin und her bewegt wird, wodurch mittels der bewegbaren Kamera 14 Bilddaten (Helligkeitswerte und/oder Grauwerte und/oder Farbwerte) der Oberfläche der Zigarette 12 aufgenommen werden.

Die von der Scaneinrichtung 13 erfassten zeilenförmigen topographischen Profile der Oberfläche der Zigarette 12 werden an eine Zeilenaufnahmeeinrichtung 44 übermittelt, während die von der Kamera 14 erfassten Bilddaten (z.B. Grauwerte etc.) an eine Aufnahmeeinrichtung 43 (insbesondere 3D-Aufnahmevorrichtung) übermittelt werden. Durch eine Zuordnung der zeilenförmigen Aufnahmen aus der Zeilenaufnahmeeinrichtung 43 und der dreidimensionalen Aufnahme der topographischen Oberfläche der Zigarette 12 aus der Aufnahmeeinrichtung 44 wird eine Einzelaufnahme 45 aufgrund der positionsgenauen Zuordnung der erfassten Daten in einer Einzelaufnahmeeinrichtung 45 erreicht bzw. ermittelt. Aufgrund der einzelnen gewonnenen Einzelaufnahmen wird eine Gesamtbildaufnahme in einer Gesamtbildaufnahmeeinrichtung 46 erstellt, die mittels einer entsprechenden Anzeigeeinrichtung entsprechend grafisch dargestellt werden kann.

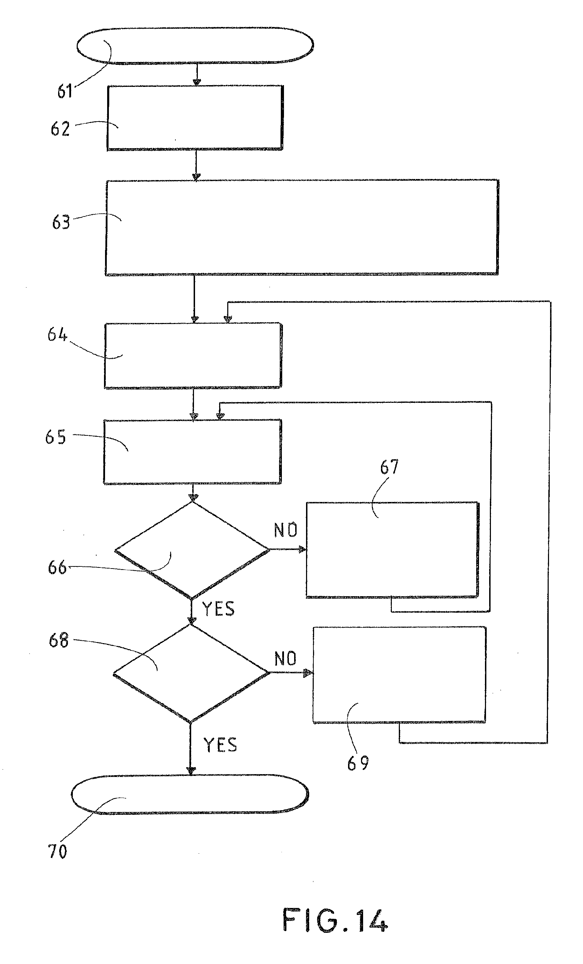

In Fig. 14 ist schematisch ein Ablaufdiagramm eines Erfassungsvorgangs für eine Messeinrichtung 10 gemäß Fig. 1 dargestellt.

Nach dem Start zur Bilddatenaufnahme im Schritt 61 wird zunächst im nachfolgenden Schritt 62 zur Vorbereitung der Messung automatisch der Durchmesser des zu prüfenden Messobjekts bzw. der zu prüfenden Zigarette 12 bestimmt. Optional kann dies auch durch eine entsprechende Parametervorgabe des Durchmessers erfolgen, so dass vor Beginn der Erfassung der Oberfläche beispielsweise einer zu prüfenden Zigarette der Nenndurchmesser der zu untersuchenden Zigarette bzw. des stabförmigen Testobjekts durch Parametereingabe dem Steuerungssystem zur Bilddatenaufnahme übermittelt wird.

Alternativ kann auch eine Kalibrierung des Kamerasystems durchgeführt werden und dadurch der Durchmesser des zu untersuchenden stabförmigen Artikels bzw. der Zigarette durchgeführt werden. Beispielsweise kann dies dadurch erfolgen, dass der Abstand zwischen der Oberfläche der Zigarette 12 (Messobjekt) und der Scaneinrichtung 13 bestimmt werden, wodurch hieraus der Durchmesser der Zigarette 12 ermittelt wird. Alternativ kann der Abstand zur Zigarette 12 (Messobjekt) auch durch Variation bzw. Verstellung des Fokus der Kamera 14 ermittelt werden.

Zur Kalibrierung kann die Messeinrichtung zusätzlich unter Verwendung eines Referenzstabs mit einem Referenzdurchmesser oder dergleichen auf optische Weise auf den passenden Durchmesser eines stabförmigen Produktes geeicht werden.

Anschließend wird im Verfahrensschritt 63 eine motorisierte, durchmesserabhängige Höhenverstellung der Kamera 14 durchgeführt. Sofern die Kamera 14 mit einem variierbaren Fokus ausgestattet ist, kann dies auch durch eine Fokusverstellung über das Objektiv der Kamera 14 erfolgen.

Im Anschluss daran wird die Startposition der Messeinrichtung 10 im Verfahrensschritt 64 angefahren, um entsprechende Bilddaten über die gescannte Oberfläche der Zigarette 12 in den nachfolgenden Verfahrensschritten zu erfassen.

Um in Umfangsrichtung mittels des Kamerasystems 11 (vgl. Fig. 1) Bilddaten (Helligkeitswerte und/oder Grauwerte und/oder Farbwerte) und topologische Daten über die Oberfläche der Zigarette 12 in Umfangsrichtung sukzessive zu erfassen, sind die Stützwellen 16 beispielsweise unter Verwendung einer entsprechenden Schrittmotorsteuerung in einer vorbestimmten Position angehalten, so dass die Zigarette 12 mit ihrer Mittenlängsachse positioniert ist. Hierdurch wird in einem Verfahrensschritt 65 die Oberfläche der Zigarette in Form von Bilddaten und topologischen Daten durch Bewegen des Kamerasystems entlang der Mittenlängsachse erfasst.

Nach der Aufzeichnung der Bilddaten und topologischen Daten der Oberfläche der Zigaretten wird im Verfahrensschritt 66 geprüft, ob die Endposition des Kamerasystems 11 erreicht ist. Ist dies nicht der Fall, werden die Scaneinrichtungen 13 und die Kamera 14 durch einen Motor parallel zur Mittenlängsachse der Zigarette 12 bewegt, so dass in entsprechenden Abständen bzw. Schrittweiten, beispielsweise von 0,2 mm, die Scaneinrichtung 13 und die Kamera 14 im Verfahrensschritt 67 bewegt werden und die nächste Aufnahmeposition der Scaneinrichtung 13 und der Kamera 14 angefahren wird. Anschließend werden weitere Daten über die Oberfläche der Zigarette 12 im Verfahrensschritt 65 gewonnen.

Die Position der Scaneinrichtung 13 bzw. der Kamera 14 sind dem Messsystem bekannt. Dies kann beispielsweise durch eine direkte mechanische Kopplung oder durch eine passend abgestimmte Führung wie z.B. eine Linearwegmessung oder eine Positionsbestimmung durch Drehgeber oder dergleichen erfolgen, so dass in einer Auswerteeinrichtung die erfassten 2D-Farbwertdaten mit den 3D-Daten über die Höhen- und Tiefeninformation der Oberfläche miteinander kombiniert werden können. Alternativ können auch aufgenommene Teilbilderinformationen für eine Auswertung miteinander entsprechend kombiniert werden.

Ist im Verfahrensschritt 66 die Endposition der Scaneinrichtung 13 und der Kamera 14 erreicht, wird anschließend in einem nachfolgenden Verfahrensschritt 68 abgefragt, ob die zu prüfende Zigarette 12 vollständig um 360° gedreht worden ist. Ist dies nicht der Fall, wird die Zigarette 12 durch die Drehung der Stützwellen 16 in Umfangsrichtung um eine vorbestimmte Schrittweite bzw. Winkelvorgabe gedreht, wodurch die Zigarette 12 die nächste Aufnahmeposition im Verfahrensschritt 69 einnimmt. Anschließend werden weitere entsprechende Bilddaten und topologische Daten über die Oberfläche der Zigarette 12 nach Einnehmen der Startposition im Verfahrensschritt 64 und Durchlaufen der Verfahrensschritte 65, 66 sowie 67 erfasst.

Wird im Verfahrensschritt 68 festgestellt, dass die zu prüfende Zigarette 12 vollständig um 360° gedreht worden ist, wird die Aufzeichnung über die Aufzeichnung der Oberfläche der Zigarette in Umfangsrichtung im nachfolgenden Verfahrensschritt 70 beendet.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Messeinrichtung
- 11: Kamerasystem
- 12: stabförmige Artikel
- 12A: Strangabschnitt eines strangförmigen Artikels
- 13: Scaneinrichtung
- 13A: Scaneinrichtung
- 14: Kamera
- 14A, 14B: Kamera
- 15, 15A: Flächenkamera
- 15B, 15C: Flächenkamera
- 16: Stützwellen
- 19: Bilddaten
- 20: Vertiefung
- 21: Erhöhung
- 22: Verschmutzung
- 24: Fokussiereinrichtung
- 25B, 25C: Fokussiereinrichtung
- 30: Gesamtsteuerungssystem
- 32: Positionsmodul
- 34: Motorsteuereinheit
- 36: Positions-Synchronisiermodul
- 38: Auswerteeinrichtung
- 40: Anzeigeeinheit
- 43: Zeilenaufnahmeeinrichtung
- 44: Aufnahmeeinrichtung
- 45: Einzelaufnahmeeinrichtung
- 46: Gesamtbildaufnahmeeinrichtung
- 53: Motor
- 54: Motor
- 61 bis 70: Verfahrensschritt

## Patentansprüche

1. Verfahren zum optischen Untersuchen von stabförmigen oder strangförmigen Artikeln (12, 12A) der Tabak verarbeitenden Industrie in einer Messeinrichtung (10), insbesondere Online-Messeinrichtung oder Offline-Messeinrichtung, wobei mittels eines Kamerasystems (11) die Helligkeitswerte und/oder Grauwerte und/oder Farbwerte der Oberfläche eines stabförmigen oder strangförmigen Artikels (12, 12A) in Umfangsrichtung des Artikels (12, 12A) abschnittsweise und schrittweise erfasst werden, wobei mittels des Kamerasystems (11) die Topographie der abschnittsweise erfassten Oberflächen in Umfangsrichtung erfasst wird und wobei in Bezug auf die Mittenlängsachse des stabförmigen Artikels (12, 12A) eine translatorische und/oder rotatorische Relativbewegung zwischen dem Kamerasystem (11) zum Erfassen der Helligkeitswerte und/oder Grauwerte und/oder Farbwerte der Oberfläche und der Topographie der Oberflächen und dem stabförmigen oder strangförmigen Artikel (12, 12A) während des schrittweise Erfassens der Oberfläche des stabförmigen oder strangförmigen Artikels (12, 12A) in Umfangsrichtung ausgeführt wird.

2. Verfahren nach Anspruch 1, **dadurch gekennzeichnet, dass** das Kamerasystem zum Erfassen der Helligkeitswerte und/oder Grauwerte und/oder Farbwerte der Oberfläche und der Topographie der Oberfläche des stabförmigen oder strangförmigen Artikels (12, 12A) mindestens eine 3D-Kamera und/oder mindestens eine Scaneinrichtung (13, 13A), insbesondere eine Laserscaneinrichtung, und/oder mindestens eine Kamera (14, 14A, 14B), die insbesondere als Zeilenkamera ausgebildet ist, aufweist.

3. Verfahren nach Anspruch 2, **dadurch gekennzeichnet, dass** das Kamerasystem (11) zum schrittweisen oder abschnittsweisen Erfassen der Topographie der Oberfläche des stabförmigen Artikels (12) mindestens eine Flächenkamera aufweist, wobei vorzugsweise die mindestens eine Flächenkamera eine Fokussiereinrichtung (24, 24A) aufweist, oder dass das Kamerasystem (11) zum Erfassen der Topographie der Oberfläche des stabförmigen Artikels (12) mindestens eine Zeilenkamera aufweist, wobei vorzugsweise die mindestens eine Zeilenkamera eine Fokussiereinrichtung (24, 24A) aufweist.

4. Verfahren nach einem der Ansprüche 1 bis 3, **dadurch gekennzeichnet, dass** das Kamerasystem (11) wenigstens eine Kamera (15, 15A) zum Erfassen einer Stirnfläche eines Kopfendes des stabförmigen Artikels aufweist, wobei insbesondere die Kamera (15, 15A) zum Erfassen einer Stirnfläche eines Kopfendes des stabförmigen Artikels als eine Flächenkamera (15, 15a), insbesondere mit einer Fokussiereinrichtung (25, 25A), oder als eine 3D-Kamera ausgebildet ist.

5. Verfahren nach Anspruch 2, **dadurch gekennzeichnet, dass** zur Erfassung der Oberfläche des stabförmigen Artikels (12) in Umfangsrichtung und der Topographie der Oberfläche der stabförmigen Artikel (12) mittels einer Rotiereinrichtung um seine Mittenlängsachse rotiert wird und die mindestens eine Kamera (14, 14A, 14B) und/oder die mindestens eine Scaneinrichtung (13, 13A) des Kamerasystems (11) parallel zur Mittenlängsachse des stabförmigen Artikels (12), vorzugsweise im Wechsel mit der Rotationsbewegung des stabförmigen Artikels (12) mittels eines Antriebs, bewegt wird.

6. Verfahren nach Anspruch 2, **dadurch gekennzeichnet, dass** die mindestens eine Kamera (14, 14A, 14B) und/oder die mindestens eine Scaneinrichtung (13, 13A) des Kamerasystems (11) quer, insbesondere senkrecht zur Mittenlängsachse des stabförmigen Artikels während der schrittweisen und abschnittweisen Erfassung der Oberfläche in Umfangsrichtung und der Topographie der Oberfläche des Artikels bewegt wird, so dass der Abstand zwischen der Mittenlängsachse des stabförmigen Artikels (12) und der mindestens einen Kamera (14, 14A, 14B) des Kamerasystems (11) verändert wird.

7. Verfahren nach Anspruch 1 oder 2, **dadurch gekennzeichnet, dass** das Kamerasystem (11) derart ausgebildet ist, dass die Oberfläche des stabförmigen Artikels in Umfangsrichtung abschnittsweise in einem Erfassungsvorgang vollständig in Umfangsrichtung erfasst wird, wobei in einem nachfolgenden Erfassungsvorgang die mindestens eine Kamera (14, 14A, 14B) des Kamerasystems (11) und der stabförmigen Artikel (12) relativ zueinander bewegt werden.

8. Verfahren nach einem der Ansprüche 1 bis 7, **dadurch gekennzeichnet, dass** die von dem Kamerasystem (11) erfassten Helligkeitswerte und/oder Grauwerte und/oder Farbwerte und die die von dem Kamerasystem (11) erfassten Topographiewerte einer Datenspeichereinrichtung (32) zugeführt werden, wobei den erfassten Helligkeitswerten und/oder Grauwerten und/oder Farbwerten und Topographiewerten jeweils eine abschnittsgenaue und/oder ortsgenaue Positionskennung eines Positionsdatenmoduls (36) zugewiesen werden.

9. Verfahren nach Anspruch 6 oder 7, **dadurch gekennzeichnet, dass** in einem nachfolgenden Schritt die von der mindestens einen 3D-Kamera (14, 14A, 14B) und dem mindestens einen 3-D-Scanner (13, 13A) erfassten Topographiewerte mit den von der mindestens einen 3D-Kamera oder Flächenkamera (14, 14A, 14B) oder Zeilenkamera (14, 14A, 14B) erfassten Helligkeitswerte und/oder Grauwerte und/oder Farbwerte mittels einer Steuereinrichtung abschnittsweise und deckungsgleich zu einem Gesamtbild zusammengeführt werden, wobei in einem weiter nachfolgenden Schritt mittels einer Auswerteeinrichtung (38) das Gesamtbild hinsichtlich Unregelmäßigkeiten analysiert wird und wobei die zuvor ermittelten Unregelmäßigkeiten in mindestens zwei Fehlergruppen, insbesondere nach so genannten Flächenfehlern, insbesondere Verschmutzungen, und nach Profilfehlern, insbesondere Falten oder Löcher, klassifiziert werden.

10. Anordnung (10) zum optischen Untersuchen eines strangförmigen oder stabförmigen Artikels (12, 12A) der Tabak verarbeitenden Industrie, wobei ein Kamerasystem (11) zum Erfassen der Oberfläche des Artikels (12, 12A) in Umfangsrichtung des Artikels (12, 12A) vorgesehen ist, wobei das Kamerasystem (11) derart ausgebildet ist, dass abschnittsweise die Oberfläche in Umfangsrichtung und die Topographie der Oberfläche in Umfangsrichtung erfasst werden, wobei eine Bewegungseinrichtung für das Kamerasystem (11) und/oder des strangförmigen oder stabförmigen Artikels (12, 12A) vorgesehen ist, so dass in Bezug auf die Mittenlängsachse des strangförmigen oder stabförmigen Artikels (12, 12A) während des Erfassens der Oberfläche und der Topographie der Oberfläche des Artikels (12, 12A) eine translatorische und/oder rotatorische Relativbewegung zwischen dem Kamerasystem (11) und dem Artikel (12, 12A) ausführbar ist.

11. Anordnung (10) nach Anspruch 10, **dadurch gekennzeichnet, dass** das Kamerasystem (11) zum Erfassen der Oberfläche und der Topographie der Oberfläche des strangförmigen oder stabförmigen Artikels (12, 12A) mindestens eine 3D-Kamera oder eine Scaneinrichtung, insbesondere eine Laserscaneinrichtung, und/oder mindestens eine Kamera (14, 14A, 14B) aufweist, wobei insbesondere die mindestens eine Kamera als Flächenkamera oder als Zeilenkamera (14A, 14B) ausgebildet ist.

12. Anordnung (10) nach Anspruch 11, **dadurch gekennzeichnet, dass** das Kamerasystem (11) zum Erfassen der Oberfläche und der Topographie der Oberfläche des Artikels (12, 12A) eine Flächenkamera aufweist, wobei die Flächenkamera eine Fokussiereinrichtung (24, 24A) aufweist, oder das Kamerasystem (11) zum Erfassen der Oberfläche und der Topographie der Oberfläche des strangförmigen oder stabförmigen Artikels (12, 12A) in Umfangsrichtung eine Zeilenkamera (14A, 14B) aufweist, wobei die Zeilenkamera eine Fokussiereinrichtung (24, 24A) aufweist.

13. Anordnung (10) nach einem der Ansprüche 10 bis 12, **dadurch gekennzeichnet, dass** wenigstens eine 3D-Kamera oder eine Flächenkamera (15, 15A, 15B, 15C) zum Erfassen einer Stirnfläche des stabförmigen Artikels (12) vorgesehen ist, wobei vorzugsweise die mindestens eine 3D-Kamera oder Flächenkamera eine Fokussiereinrichtung (25, 25A) aufweist.

14. Anordnung (10) nach einem der Ansprüche 10 bis 13, **dadurch gekennzeichnet, dass** eine Rotiereinrichtung zur Rotation des stabförmigen Artikels (12) um seine Mittenlängsachse und eine Führungseinrichtung für die mindestens eine Kamera (14, 14A, 14B) und der Scaneinrichtung (13, 13A) des Kamerasystems (11) zur Bewegung der mindestens einen Kamera (14, 14A) und/oder der mindestens einen Scaneinrichtung (13, 13A) des Kamerasystems (11) parallel zur Mittenlängsachse des stabförmigen Artikels (12) vorgesehen sind.

15. Anordnung (10) nach einem der Ansprüche 10 bis 14, **dadurch gekennzeichnet, dass** eine Führungseinrichtung für die 3D-Kamera oder die Flächenkamera (15, 15A, 15B, 15C) des Kamerasystems (11) vorgesehen ist, so dass die 3D-Kamera oder die Flächenkamera des Kamerasystems (11) zur Erfassung der Oberfläche des stabförmigen Artikels (12) in Umfangsrichtung und der Topographie der Oberfläche um die Mittenlängsachse des stabförmigen Artikels (12) in Umfangsrichtung des Artikels bewegbar ist und parallel zur Mittenlängsachse des stabförmigen Artikels (12) mittels eines motorischen Antriebs bewegbar ist, wobei die mindestens eine 3D-Kamera oder Flächenkamera des Kamerasystems senkrecht zur Mittenlängsachse des stabförmigen Artikels (12) bewegbar ist, so dass der Abstand zwischen der Mittenlängsachse des stabförmigen Artikels und der mindestens einen 3D-Kamera oder Flächenkamera des Kamerasystems (11) mittels mindestens einen Antriebs veränderbar ist
und/oder dass ein Steuerungssystem für die mindestens eine Kamera (14, 14A, 14B) und/oder der mindestens einen Scaneinrichtung (13A, 13B) und/oder für die Bewegung des strangförmigen oder stabförmigen Artikels (12, 12A) vorgesehen ist, wobei das Steuerungssystem eine Datenspeichereinrichtung, ein Positionsdatenmodul und eine Auswerteeinrichtung für die erfassten Helligkeitswerte und/oder Grauwerte und/oder Farbwerte und Topographiewerte aufweist, wobei vorzugsweise eine Anzeigeeinheit zur Darstellung der erfassten Bilddaten und/oder der mindestens zwei Fehlergruppen der Oberfläche des stabförmigen oder strangförmigen Artikels (12, 12A) vorgesehen ist.
